Europäisches Patentamt

European Patent Office

Office européen des brevets

(19)

(11) Numéro de publication : **0 010 118**
**B1**

(12)

## FASCICULE DE BREVET EUROPÉEN

(45) Date de publication du fascicule du brevet :
19.05.82

(21) Numéro de dépôt : 78400144.8

(22) Date de dépôt : 23.10.78

(51) Int. Cl.³ : **F 28 D  5/02**, F 28 F 25/06//
F28C1/00, F28B1/06

(54) Corps d'échange thermique, notamment pour réfrigérant atmosphérique.

(43) Date de publication de la demande :
30.04.80 (Bulletin 80/09)

(45) Mention de la délivrance du brevet :
19.05.82 Bulletin 82/20

(84) Etats contractants désignés :
BE CH DE FR GB LU NL SE

(56) Documents cités :
BE - A - 423 089
FR - A - 623 653
FR - A - 1 399 841
US - A - 1 745 297
US - A - 2 332 336

(73) Titulaire : HAMON-SOBELCO S.A. Société dite:
50-58, Rue Capouillet
B-1060 Bruxelles (BE)

(72) Inventeur : Flandroy, Myriam Renée Claire Ghislaine
43, Avenue de Tercoigne
B-1170 Bruxelles (BE)

(74) Mandataire : Lavoix, Jean et al
c/o Cabinet Lavoix 2, Place D'Estienne D'Orves
F-75441 Paris Cedex 09 (FR)

Imprimerie Jouve, 18, rue St-Denis, 75001 Paris, France

Corps d'échange thermique, notamment pour réfrigérant atmosphérique

L'invention concerne les corps d'échange thermique entre au moins un fluide par exemple de l'eau, et un gaz, par exemple l'air atmosphérique, du type comprenant une batterie de tubes échangeurs parallèles entre eux à l'intérieur desquels peut circuler ledit premier fluide, le gaz traversant ladite batterie transversalement par rapport auxdits tubes échangeurs, et des moyens pour distribuer un liquide à la surface desdits tubes, ainsi que des réfrigérants atmosphériques équipés de tels corps d'échange thermique.

Les réfrigérants atmosphériques comprennent, soit une tour formant cheminée à travers laquelle l'air atmosphérique circule par tirage naturel, avec éventuellement l'assistance d'un ou plusieurs ventilateurs, soit une simple chambre de mise en contact pourvue de ventilateurs aspirants ou soufflants. Dans les deux cas, l'air atmosphérique pénètre à la base de l'installation et en ressort à sa partie supérieure après avoir été mis directement ou indirectement en contact avec le fluide à refroidir dans un corps d'échange.

Dans les réfrigérants « humides », un liquide tel que de l'eau est refroidi directement par l'air atmosphérique, ce liquide étant distribué à la partie supérieure d'un corps d'échange « humide » constitué généralement de plaques ou de feuilles planes ondulées, de grilles de formes diverses, sur lesquelles le liquide ruisselle et/ou rebondit avec éclaboussement, tandis que le flux d'air atmosphérique qui pénètre par des orifices d'entrée d'air du réfrigérant circule dans le corps d'échange, soit perpendiculairement, soit en sens inverse du sens d'écoulement du liquide. On dit généralement que la mise en contact du liquide avec le gaz se fait par courants croisés dans le premier cas et à contre-courant dans le second cas.

Les réfrigérants « humides » ont l'avantage de présenter une très bonne capacité d'échange thermique et d'assurer un refroidissement satisfaisant même lorsque la température de l'air atmosphérique est relativement élevée, comme c'est le cas dans les pays chauds ou en été dans les pays tempérés. Par contre, ils ont l'inconvénient majeur, lorsque la température de l'air atmosphérique est basse et que celui-ci est chargé d'humidité, de rejeter un panache de vapeur humide. Le panache des réfrigérants humides est une nuisance pour l'environnement par le brouillard qu'il peut causer et les dangers qui en résultent, notamment pour la circulation routière, par les météores (pluie, neige, ...) qu'il peut engendrer, et cela, même en l'absence de précipitations naturelles, par le verglas inattendu qu'il peut causer, par la réduction de l'ensoleillement, par une modification du microclimat, par une réduction de la visibilité, etc.

Les réfrigérants « secs », dans lesquels le fluide, qui est liquide, gazeux ou en cours de condensation, traverse un échangeur « sec » ou à contact indirect comportant une paroi qui l'isole de l'air atmosphérique, ont l'avantage d'éviter, quelles que soient les conditions atmosphériques, la formation d'un panache à la sortie du réfrigérant. Un tel échangeur peut être constitué, par exemple, de batteries de tubes parcourus intérieurement par le fluide à refroidir. Il est classique d'utiliser pour de tels échangeurs des tubes métalliques à ailettes, mais en raison de leur coût et des problèmes de corrosion, on tend à leur substituer des tubes en matière plastique, de tels échangeurs comportant alors des centaines ou milliers de tubes de plus faible diamètre et de plusieurs mètres, voire plus de vingt mètres de long. Mais ceux-ci conduisent très mal la chaleur de sorte que, soit le refroidissement obtenu est insuffisant, soit le nombre de tubes doit être exagérément multiplié.

Pour tenter de concilier les avantages des réfrigérants « secs » et des réfrigérants « humides », il a également été réalisé des réfrigérants dits « mixtes » qui associent des échangeurs humides ou à mise en contact direct et des échangeurs secs ou à mise en contact indirect, à travers lesquels les flux d'air respectifs circulent en parallèle ou en série. Dans ces réfrigérants « mixtes », par temps froid et humide, les échangeurs « secs » sont tous indispensables pour assécher l'air rejeté par les échangeurs « humides », tandis que ceux-ci sont surabondants car, pouvant refroidir l'eau à des températures trop froides, ils risquent de provoquer le gel. Des dispositions doivent alors être prises du côté des échangeurs humides telle qu'une mise hors service partielle ou totale, un étranglement du débit d'air, ou une réduction du nombre d'étages du corps d'échange comme décrit, par exemple, dans la demande de brevet FR-A-2 390 697.

Par contre, en été, lorsque le temps est chaud et sec, le panache que donnerait seul le corps d'échange humide serait inexistant ou suffisamment faible pour ne pas gêner. L'échangeur « sec » est alors inutile ; s'il reste en service, il peut être même nuisible par les pertes de charge qu'il fait subir au flux d'air qui le traverse, que ce flux soit en parallèle ou en série par rapport à l'échangeur « humide ». Si les échangeurs sont disposés en parallèle du côté air, on peut même être amené à fermer partiellement ou totalement l'alimentation en air de l'échangeur sec pour ainsi accroître le débit d'air induit à travers l'échangeur humide et abaisser la température de l'eau refroidie qui, à cette saison, est souvent défavorablement élevée.

Comme on le voit, de tels réfrigérants « mixtes », dont la section humide est souvent dimensionnée pour ne pas dépasser en été une température maximale d'eau refroidie et dont la section sèche est dimensionnée pour réduire le panache en hiver, exploitent rarement avec une pleine efficacité simultanément tous ces éléments.

Une amélioration substantielle par rapport aux conceptions précédentes des réfrigérants « mixtes », réside dans l'utilisation de corps d'échange « hybrides », c'est-à-dire de corps d'échange qui peuvent être de type « sec » et/ou de type « humide » selon l'emploi qui en est fait, et qui peuvent commuter d'un fonctionnement en échangeur « humide » à un fonctionnement en échangeur « sec » et vice-versa. De tels corps d'échange sont donc des échangeurs hybrides qui peuvent être parcourus intérieurement par le fluide à refroidir et être aspergés extérieurement par ce fluide. Les réfrigérants mixtes correspondants peuvent être alors par exemple constitués d'un échangeur humide fonctionnant toute l'année, auquel sont associés des échangeurs « hybrides » qui, par temps froid et humide, fonctionnent tous en sec pur et, par temps chaud et sec, en humide pur et, entre ces conditions météorologiques extrêmes, peuvent se répartir dans une proportion variable en des éléments travaillant en échangeur humide et en échangeur sec.

Les demandes de brevet DE-A-1 812 111 et FR-A-2 228 208 décrivent de tels réfrigérants mixtes conçus dans le but de réduire le panache, les échangeurs secs et humides étant disposés dans un flux d'air unique et les échangeurs secs constitués de lits de tubes horizontaux étant susceptibles d'être arrosés et travaillant alors en corps d'échange hybride. Dans les deux cas, il s'agit de l'aspersion de lits de tubes métalliques à ailettes, ce qui aggrave les problèmes de corrosion.

Par contre, la demande de brevet FR-A-2 289 868 décrit des échangeurs « hybrides » en matière organique polymère à conduits horizontaux. En fonctionnement « sec », ces échangeurs travaillent en courants croisés, et en fonctionnement « humide », à contre-courant. Les raccordements hydrauliques pour le fonctionnement en échangeur « sec » sont latéraux et l'aspersion réalisée au moyen de rampes disposées au-dessus des échangeurs.

Toutefois, le liquide circulant dans la partie « sèche » de ces échangeurs hybrides étant aussi celui ruisselant à travers la partie humide, il se charge des poussières véhiculées par l'air (tout réfrigérant humide est un laveur d'air), et ces poussières se déposent dans les conduits horizontaux des échangeurs, adhèrent à leurs parois et finissent par entraver la circulation du liquide au point de rendre le fonctionnement de l'installation impossible. Ces dépôts sont d'autant plus rapides que la vitesse de circulation du liquide est plus facile. Or, cette vitesse est souvent faible pour des raisons de raccordement hydraulique (nombre élevé de passes) et pour ne pas avoir de pertes de charges prohibitives.

Quant au nettoyage périodique de ces conduits étroits, atteignant éventuellement plusieurs mètres, voire quelques dizaines de mètres de long, il est pratiquement irréalisable.

Par contre, la disposition verticale des conduits ou tubes des échangeurs secs évite l'obstruction de ceux-ci par les impuretés solides du liquide les parcourant car ces impuretés tombent dans les bassins ou boîtes à eau inférieures où elles peuvent s'accumuler longtemps avant de nécessiter un nettoyage, opération ne présentant pas de difficultés majeures.

Le brevet BE-A-423 089 décrit un échangeur hybride dans lequel des tubes échangeurs verticaux traversent une boîte à eau à leur partie supérieure. Ces tubes sont raccordés dans des orifices de la plaque formant le dessus de la boîte à eau et s'étendent à travers des orifices de plus grand diamètre que les tubes, ménagés dans le fond de la boîte à eau. En service, les tubes peuvent être parcourus par un fluide, tandis que le liquide amené à la boîte à eau s'écoule par l'intermédiaire des orifices de son fond le long des surfaces extérieures des tubes. Toutefois, ce mode de « mouillage » des tubes n'est pas efficace, car l'eau a tendance à s'écouler suivant des trajets préférentiels le long des surfaces extérieures des tubes.

Le brevet FR-A-1 399 841 décrit un échangeur de chaleur pour transférer de la chaleur entre un fluide et un liquide qui comprend des tubes parcourus par le fluide et à la surface duquel ruisselle le liquide. La structure de l'échangeur est analogue à celle décrite dans le brevet BE-A-423 089 et présente les mêmes inconvénients. Il convient en outre de noter que la fonction de cet échangeur est fondamentalement différente de celle des échangeurs atmosphériques.

La technique des échangeurs de chaleur à tubes peut, en outre, être illustrée par le brevet FR-A-623 653 et le brevet US-A-2 332 336.

L'invention a pour but de réaliser un corps d'échange thermique du type précité qui, malgré une disposition verticale ou fortement inclinée sur l'horizontale des tubes permette un mouillage efficace de la surface extérieure des tubes.

A cet effet, l'invention a pour objet un corps d'échange thermique entre au moins un fluide, par exemple de l'eau, et un gaz, par exemple l'air atmosphérique, comprenant :

— une batterie de tubes échangeurs verticaux ou fortement inclinés sur l'horizontale, sensiblement parallèles entre eux, à l'intérieur desquels peut circuler ledit fluide,

— un dispositif horizontal collecteur ou distributeur dudit fluide auquel lesdits tubes échangeurs sont raccordés de façon étanche à leur partie supérieure,

— un dispositif horizontal d'alimentation en liquide, le dispositif distributeur ou collecteur de fluide et le dispositif d'alimentation en liquide étant placés l'un au-dessus de l'autre.

— des moyens pour distribuer le liquide dudit dispositif d'alimentation sur la surface extérieure des tubes échangeurs,

— et des moyens pour faire circuler le gaz à travers ladite batterie, transversalement par rapport aux tubes, dans les intervalles ménagés entre ces derniers,

caractérisé en ce que lesdits moyens distributeurs de liquide comprennent une série de tubes pulvérisateurs disposés en alternance avec les tubes échangeurs, parallèlement à ces derniers et raccordés à leur partie supérieure audit dispositif d'alimentation en liquide, les tubes raccordés à celui des dispositifs qui est placé au-dessus de l'autre traversant ce dernier.

Grâce à cet agencement, on peut alimenter à volonté les tubes échangeurs, les tubes pulvérisateurs ou les deux à la fois, ce qui permet de faire fonctionner l'échangeur respectivement, soit dans le mode « sec », soit dans le mode « humide », soit dans le mode « hybride ». La disposition verticale des tubes permet d'éviter leur obstruction par des dépôts tandis que la disposition des tubes pulvérisateurs en alternance avec les tubes échangeurs garantit une uniformité de l'arrosage de la surface extérieure des tubes dans toute la section de l'échangeur, qui fait alors fonction de corps d'échange humide entre le gaz et le liquide.

L'invention concerne également l'application de l'échangeur suivant l'invention aux réfrigérants atmosphériques « secs » ou « mixtes ».

Dans l'application aux réfrigérants « secs », l'aspersion de l'échangeur par un liquide, généralement de l'eau, a pour effet d'améliorer l'échange thermique en faisant travailler l'air sur la base de sa température humide comme dans les réfrigérants humides et non plus sur la base de sa température sèche (toujours plus élevée que la température humide lorsque l'humidité relative est inférieure à 100%), accroissant ainsi la différence de température entre le fluide réfrigérant (air + eau) et le fluide réfrigéré.

Les tubes de l'échangeur sont toujours parcourus intérieurement par le fluide à refroidir, tandis que l'arrosage, effectué par un liquide, généralement de l'eau, distinct de ce fluide, et s'évaporant au moins partiellement au contact de l'air, n'est mis en service que lorsque les conditions atmosphériques et la charge thermique le requièrent.

Dans l'application aux réfrigérants « mixtes », le liquide arrosant les tubes de l'échangeur suivant l'invention est celui qui se refroidit dans l'échangeur « humide ». Le corps d'échange fonctionne en corps d'échange « sec » lorsqu'il n'est pas arrosé et est alors parcouru intérieurement par le liquide à refroidir. Il fonctionne en corps d'échange « humide » lorsqu'il est arrosé : dans ce cas, il n'est pas thermiquement nécessaire que le liquide passe également à l'intérieur des tubes, ceux-ci pouvant alors être vides de liquide, auquel cas ils contiennent normalement de l'air humide stagnant. Dans ce cas, le réfrigérant « mixte » fonctionne en réalité uniquement en réfrigérant « humide ».

D'autres caractéristiques et avantages de l'invention ressortiront de la description plus détaillée qui va suivre, faite en se référant aux dessins annexés représentant différents modes d'exécution et sur lesquels :

La Figure 1    est une vue partielle en élévation et en coupe d'un corps d'échange thermique suivant l'invention ;

La Figure 2    est une coupe suivant la ligne 2-2 de la Fig. 1 ; la Figure 2a    est une vue analogue à la Fig. 2 mais où la batterie a un pas longitudinal différent du pas transversal ;

La Figure 3    est une vue partielle en plan et en coupe montrant des dispositifs d'entretoisement des tubes ;

La Figure 4    est une vue partielle en élévation de l'échangeur de la Fig. 3 ;

La Figure 5    est une vue analogue à la Fig. 3 montrant une variante de réalisation des dispositifs d'entretoisement ;

La Figure 6    est une vue analogue à la Fig. 3 montrant une autre variante de réalisation des dispositifs d'entretoisement ;

La Figure 7    est une vue analogue à la Fig. 2 montrant un autre agencement des tubes ;

La Figure 8    est une vue analogue à la Fig. 1 montrant une variante de réalisation du montage des tubes pulvérisateurs ;

La Figure 9    est une vue en élévation et en coupe d'un aéroréfrigérant atmosphérique équipé d'échangeurs suivant l'invention ;

La Figure 10    est une vue de détail montrant une variante de réalisation du circuit collecteur de fluide de l'échangeur utilisable dans le réfrigérant de la Fig. 9 ;

La Figure 11    est une vue en élévation et en coupe d'un autre type de réfrigérant mixte équipé d'un échangeur suivant l'invention ;

La Figure 12    est une vue en coupe suivant la ligne 12-12 de la Fig. 11 ;

La Figure 13    est une vue en élévation et en coupe d'un troisième type de réfrigérant mixte équipé d'un échangeur suivant l'invention ; et

La Figure 14    est une vue en plan et en coupe suivant la ligne 14-14 de la Fig. 13.

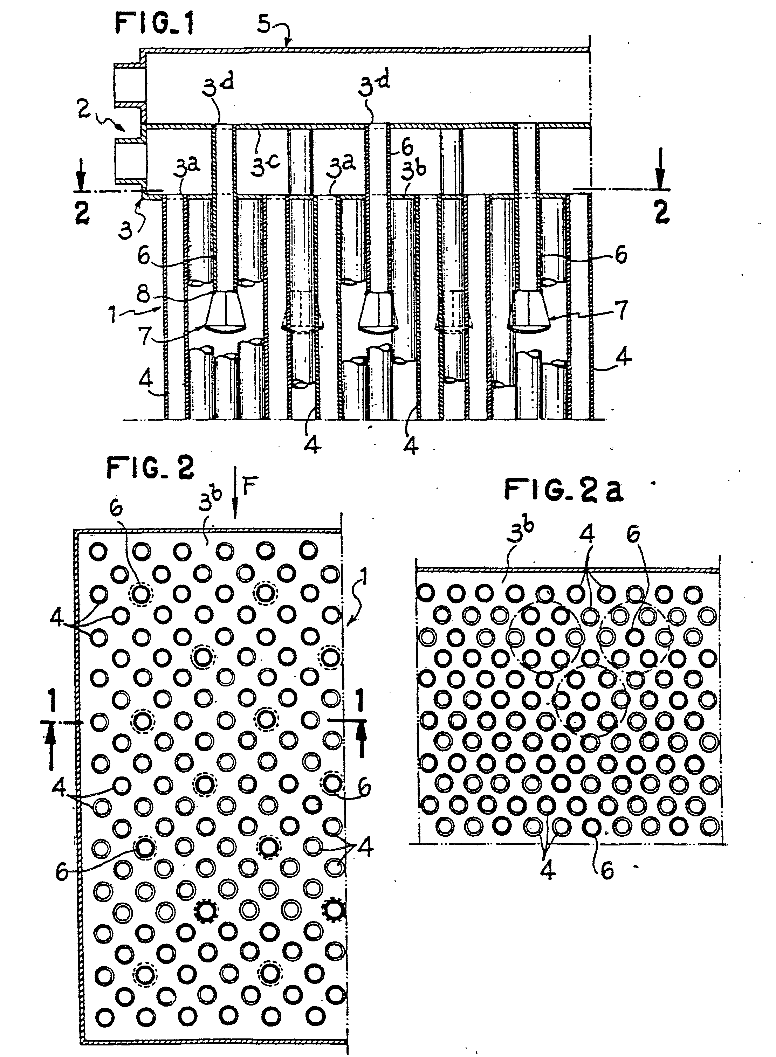

En se référant aux Fig. 1 et 2, l'échangeur thermique 1 comprend un ensemble 2 comprenant un dispositif distributeur 3 de liquide constitué d'une boîte à eau inférieure alimentant une batterie de tubes échangeurs 4 et un dispositif d'alimentation en liquide constitué d'une boîte à eau supérieure disposée au-dessus de la boîte à eau 3 et alimentant des tubes pulvérisateurs 6.

De préférence, les tubes 4 sont des tubes souples en matière organique polymère tels que ceux décrits dans les demandes de brevet FR-A-2 362 358 et FR-A-2 405 451. Ces tubes ont par exemple 15 mm de diamètre extérieur et 13 mm de diamètre intérieur. Dans l'exemple représenté, la batterie est constituée suivant sa largeur, de 23 rangées longitudinales de tubes disposés en quinconce. Le pas transversal entre les tubes 4, c'est-à-dire suivant la largeur ou épaisseur, est, par exemple, de 25 mm et le pas longitudinal de 30 mm. L'épaisseur ou largeur de la batterie de tubes est donc de 23 × 25 mm = 0,575 m. Quant à sa longueur, elle est fonction de la capacité calorifique du réfrigérant : au minimum elle est de l'ordre du mètre et, au maximum, elle peut atteindre plusieurs dizaines de mètres, voire quelques hectomètres dans le cas des réfrigérants de grandes centrales électronucléaires envisagées actuellement.

Quant à la hauteur des tubes 4, elle a intérêt à être aussi grande que les caractéristiques thermiques et technologiques de l'installation où la batterie est montée le permettent pour minimiser le coût des connexions aux boîtes à eau par mètre de longueur de tube, ces connexions constituant les éléments les plus onéreux. Les hauteurs envisagées sont comprises entre quelques mètres et une vingtaine de mètres environ, mais cette fourchette n'est pas limitative.

A leurs extrémités inférieures les tubes 4 peuvent, soit être raccordés à une boîte à eau inférieure, soit plonger librement dans un canal ou bac collecteur de liquide.

A leurs extrémités supérieures, les tubes échangeurs 4 sont fixés de façon étanche dans des orifices 3a d'une plaque 3b constituant le fond de la boîte à eau 3. La connexion étanche entre cette plaque 3b et les tubes 4 peut être assurée par tout moyen approprié, par exemple par des dispositifs (non représentés) tels que ceux décrits dans les demandes de brevet FR-A-2 341 095 et FR-A-2 380 488.

Périodiquement, tant dans le sens transversal que dans le sens longitudinal, la batterie de tubes plastiques 4 est dépourvue de tubes échangeurs, mais la plaque tubulaire 3b comporte les orifices 3a correspondant à ces tubes manquants, orifices à travers lesquels passent les tubes pulvérisateurs qui traversent de part en part la boîte à eau 3. Dans l'exemple représenté, un tube 4 sur trois est remplacé en direction longitudinale et en direction transversale par un tube 6. Les extrémités supérieures des tubes 6 traversent la plaque 3c, qui constitue la plaque supérieure de la boîte à eau 3 et le fond de la boîte à eau 5, et sont fixées de façon étanche dans des orifices 3d de la plaque 3c.

Les tubes pulvérisateurs 6 s'étendent de quelques centimètres à quelques décimètres sous la plaque 3b et se terminent par un dispositif classique 7 de dispersion de liquide provoquant l'éclatement du jet de liquide débouchant de l'extrémité inférieure 8 des tubes 6. Le dispositif de dispersion 7 peut être par exemple du type de l'un de ceux décrits dans les brevets ou demandes de brevets FR-A-1 522 450, BE-A-771 539, FR-A-2 350 145, DE-A-25 33 021, DE-A-26 26 948, US-A-3 617 036 ou de tout autre type connu des spécialistes de la technique.

En fonctionnement, les tubes échangeurs 4 sont alimentés en fluide à refroidir ou condensés par le dispositif distributeur 3, appelé conventionnellement boîte à eau, tandis que les tubes pulvérisateurs 6 sont alimentés en liquide, généralement de l'eau, par la boîte à eau supérieure 5, et arrosent les tubes échangeurs 4 grâce aux dispositifs de dispersion 7. Le gaz, qui est l'air atmosphérique dans le cas de réfrigérants atmosphériques, circule à travers la batterie transversalement par rapport à celle-ci, suivant la direction indiquée par la flèche F (fig. 2). Dans l'exemple représenté à la Fig. 2, le pas transversal est égal au pas longitudinal, mais si, comme représenté à la Fig. 2a, le pas transversal est de 25 mm et le pas longitudinal de 30 mm, chaque dispositif de dispersion 7 ou disperseur est donc entouré de six tubes échangeurs 4 à peu près à égale distance et, au centre du triangle formé par trois disperseurs 7 contigus, se trouve un tube 4 ne faisant partie d'aucun des trois groupes de six tubes des disperseurs 7 considérés, arrosé partiellement par chacun de ces trois disperseurs 7 à travers l'espace séparant les autres tubes. La maille du réseau de tubes 4 étant de 30 mm × 25 mm, le périmètre extérieur d'un tube 4 étant égal à $\pi \times 15$ mm et un tube 4 sur neuf faisant défaut, le périmètre mouillé est de :

$$\frac{r \times 0,015 \times 8/9}{0,030 \times 0,025} \simeq 56 \text{ m/m}^2$$

valeur de l'ordre de grandeur des bons corps d'échange humide à ruissellement « film ».

Pour une charge d'eau de H(m) dans la boîte à eau 5, le débit de l'orifice de section $\Omega(\text{m}^2)$ est donné par la formule de Toricelli :

$$Q = \Omega \times \alpha \sqrt{2gH}$$

où $\alpha$ est le rendement de l'orifice. Pour de l'eau et un orifice de 8 mm de diamètre, $Q \simeq 0,5$ m³/h. La maille du réseau de tubes pulvérisateurs 6 étant de 90 mm × 75 mm, le débit spécifique est de l'ordre de 80 t/(m².h), correspondant aux grands débits des échangeurs humides à ruissellement à courants croisés.

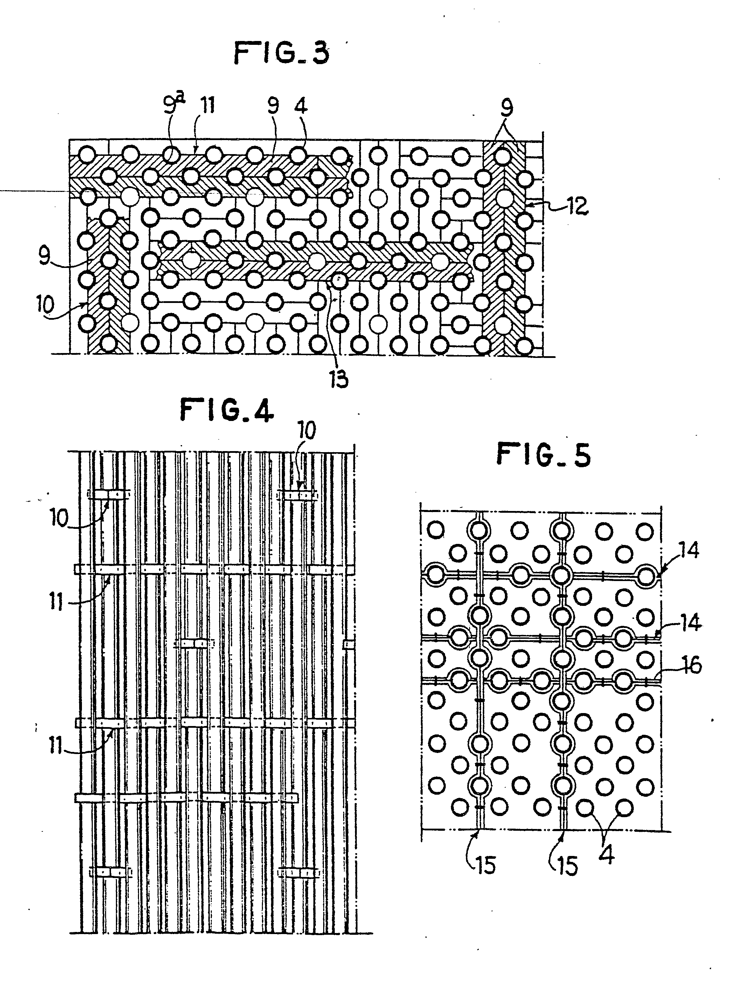

Comme représenté à la Fig. 3, pour éviter que les tubes 4 ne s'agglutinent par groupes en créant des passages privilégiés pour le gaz et pour le liquide d'arrosage, des dispositifs d'entretoisement adéquats doivent être prévus. Ces dispositifs peuvent être du type de ceux décrits dans les demandes de brevet FR-A-2 362 358 et FR-A-2 405 451 mais, du fait que dans ces brevets les lattes d'entretoisement sont pleines et contiguës, et feraient obstacle à l'écoulement de l'eau, leur agencement doit être modifié pour l'application de l'échangeur suivant l'invention, c'est-à-dire qu'elles doivent être groupées par paires indépendantes, c'est-à-dire non contiguës à une autre paire, enserrant chacune une rangée ou fraction de rangée (notamment pour les batteries de grandes longueurs) de tubes. Une paire de pareilles lattes 9 pourvues d'encoches 9a pour les tubes 4 constitue une entretoise et, sur la Fig. 3, la référence 10 désigne une entretoise transversale enserrant une rangée pleine de tubes, la référence 11 désigne une entretoise longitudinale enserrant une fraction de rangée pleine, tandis que les références 12 et 13 désignent respectivement une entretoise transversale et une entretoise longitudinale enserrant une rangée transversale et une fraction de rangée longitudinale où manque un tube sur trois, ceci étant dû au fait que les entretoises sont placées dans la batterie de tubes au-dessous des tubes pulvérisateurs 6. Suivant la hauteur de l'échangeur, c'est-à-dire la longueur des tubes, on peut prévoir une seule entretoise, ou plusieurs entretoises superposées comme représenté à la Fig. 4 pour chaque rangée transversale et chaque rangée longitudinale de tubes 4.

La Fig. 5 représente un autre type de dispositif d'entretoisement où les entretoises longitudinales 14 et transversales 15 sont également constituées de deux éléments 16, en matière métallique inaltérable ou en matière organique polymère présentant une rigidité suffisante pour garder leurs formes. Les paires d'éléments de chaque entretoise sont serrées les unes contre les autres, non plus par leurs tranches comme dans le cas des Fig. 3 et 4, mais par leurs faces et présentent des déformations définissant des logements destinés à recevoir les tubes 4. Ces éléments 16 sont maintenus serrés entre eux par tout moyen connu, notamment par collage, par clouage, par vissage, par pinçage, par clamage ou autre.

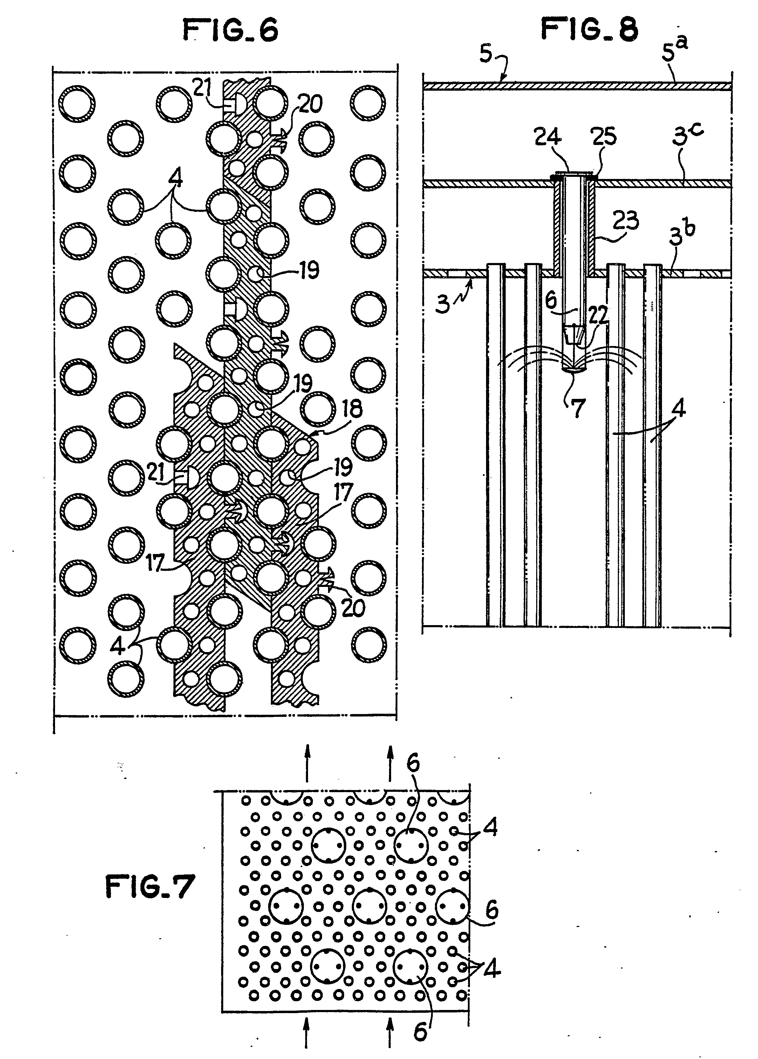

Enfin, la Fig. 6 montre une autre variante de dispositif d'entretoisement 18 constitué de lattes 17 analogues aux lattes 9 des Fig. 3 et 4, mais suivant lequel toutes les lattes sont disposées dans un même plan mais sont pourvues de trous 19 destinés à permettre l'écoulement du liquide d'arrosage suivant toute la hauteur de l'échangeur. Comme représenté, les lattes 17 peuvent être pourvues de tétons 20 et de logements 21 complémentaires d'encliquetage pour les solidariser les unes avec les autres, les lattes d'une rangée étant décalées par rapport aux lattes des deux rangées adjacentes pour assurer une liaison indirecte entre les lattes disposées bout à bout dans la même rangée.

L'effet des entretoises sur l'efficacité de l'échangeur en fonctionnement humide est plutôt favorable par les ruptures de film liquide qu'elles provoquent, effet recherché sur les plaques de ruissellement des échangeurs humides classiques par les trous ou par les reliefs qu'on y prévoit pour améliorer l'échange. Il en résulte un rebondissement et une redispersion du liquide sur les entretoises, ce qui rompt les gros filets d'eau qui pourraient se former.

Bien entendu, l'invention n'est pas limitée à des échangeurs dont les dimensions et l'agencement des tubes sont ceux décrits précédemment. Notamment les diamètres intérieurs et extérieurs des tubes échangeurs, ainsi que des tubes arroseurs peuvent être supérieurs ou inférieurs à ceux mentionnés. Ou bien, comme représentés à la Fig. 7, les tubes pulvérisateurs 6 qui traversent de façon étanche le dispositif de distribution de liquide 3 peuvent être d'un diamètre nettement supérieur à celui des tubes échangeurs 4, au point qu'ils ne puissent se substituer chacun à un seul tube plastique. Dans l'exemple représenté sur cette Fig. 7, le diamètre important des tubes pulvérisateurs 6 contraint à supprimer deux tubes échangeurs 4 dans une rangée longitudinale de tubes et un tube échangeur 4 dans chacune des rangées longitudinales adjacentes. Comme décrit précédemment, tant dans le sens longitudinal que dans les deux directions obliques, deux tubes pulvérisateurs 6 encadrent deux tubes plastiques échangeurs 4 de façon à réaliser un bon arrosage des tubes échangeurs. D'après la maille, il y a douze tubes échangeurs par tube pulvérisateur, mais chaque tube pulvérisateur est directement entouré de dix tubes échangeurs. Au centre des triangles formés par trois tubes pulvérisateurs contigus, il y a un tube échangeur qui reçoit correctement son aspersion des trois tubes pulvérisateurs ; comme il y a, dans cette disposition en quinconce six tubes échangeurs autour de chaque tube pulvérisateur, un tube pulvérisateur dessert donc bien $10 + 6 \times 1/3 = 12$ tubes échangeurs.

Dans le cas de tubes pulvérisateurs 6 de grand diamètre tels que représentés à la Fig. 7, le grand diamètre de ces tubes permet d'y monter à l'extrémité inférieure des ajutages 22 de réglage du débit, comme représenté à la Fig. 8, le diamètre des ajutages requis pour le débit étant nettement inférieur à celui des tubes. Le faible orifice de tels ajutages les rend sensibles au bouchage, mais cet inconvénient peut être pallié en prévoyant des moyens pour leur maintenance. Dans l'exemple représenté à la Fig. 8, ces moyens comprennent un manchon tubulaire 23 fixé de façon étanche à chacune de ses extrémités dans des trous des plaques de fond 3b et 3c de la boîte à eau inférieure 3 et de la boîte à eau supérieure 5 respectivement, le tube pulvérisateur 6 traversant avec jeu le manchon 23 et présentant à sa partie supérieure un épaulement de retenue 24 par lequel il prend appui sur la plaque 3c. En outre, une rondelle d'étanchéité 25 peut être prévue entre l'épaulement 24 et la plaque 3c. Pour assurer la maintenance des ajutages 22 et des disperseurs 7, il suffit de sortir les tubes 6 à travers les manchons 23 et, à cet effet, la plaque supérieure 5a de la boîte à eau 5 doit être amovible. Cette plaque peut être également supprimée, tout comme d'ailleurs dans les modes de réalisation décrits précédemment, le dispositif distributeur 5 étant alors constitué par un simple bac.

Bien entendu, de nombreuses modifications peuvent être apportées aux modes de réalisation décrits ci-dessus sans sortir du cadre de l'invention. C'est ainsi que, par exemple, les boîtes à eau inférieure 3 et supérieure 5 peuvent être compartimentées transversalement et/ou longitudinalement afin de réaliser le nombre de passes requis pour le bon fonctionnement hydraulique et thermique de l'échangeur. D'autre part, les tubes échangeurs 4 peuvent ne pas être lisses et présenter des protubérances ou extensions de surface, comme décrit par exemple dans le brevet FR-A-2 295 395, afin d'améliorer l'échange, tant en fonctionnement « humide » qu'en fonctionnement « sec ». De telles protubérances, complétées par des moyens de serrage des tubes, peuvent également servir de moyens d'entretoisement.

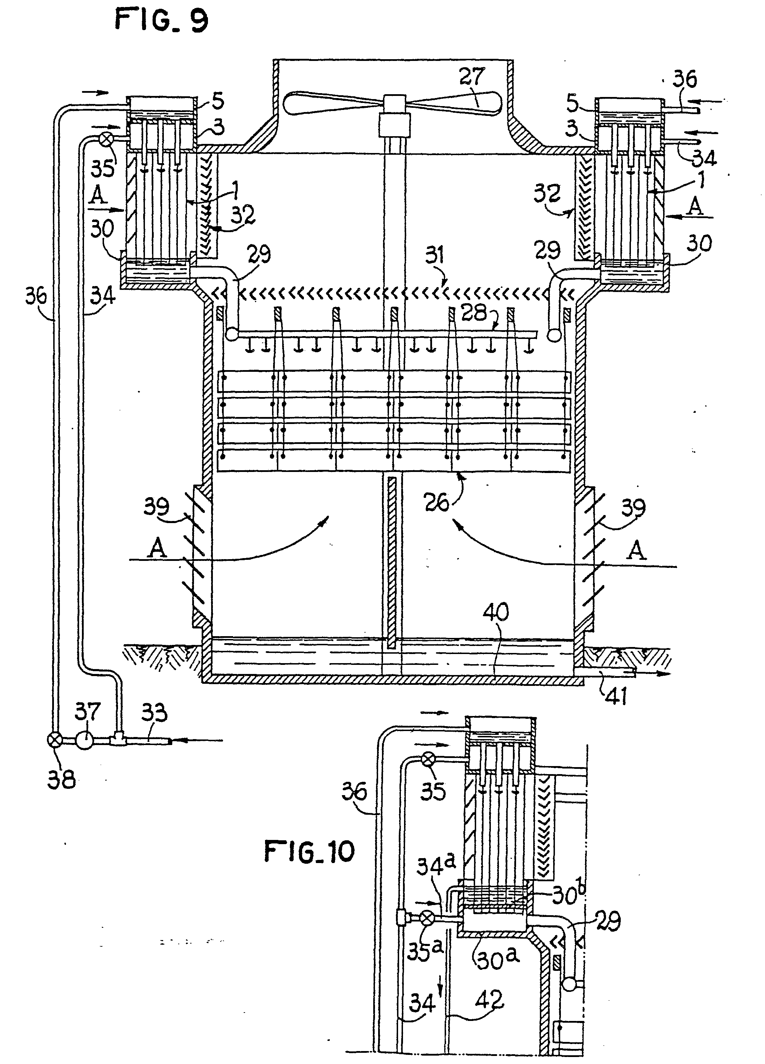

On se reportera maintenant à la Fig. 9 qui représente un réfrigérant atmosphérique « mixte » équipé d'échangeurs hybrides suivant l'invention. Ce réfrigérant est du type à ventilateur aspirant et comprend un corps d'échange humide 26 à contre-courant et des corps d'échange hybrides 1 dans lesquels les flux d'air atmosphérique pénètrent en parallèle suivant la direction des flèches A, pour se mélanger ensuite dans le réfrigérant en amont du ventilateur 27. En outre, ce réfrigérant comprend un réseau 28 de distribution de liquide, par exemple de l'eau, au corps d'échange humide 26, des manchettes 29 de raccordement au réseau de distribution 28 des bacs collecteurs 30 des échangeurs 1 dans lesquels se déverse à la fois le liquide circulant dans les tubes échangeurs et le liquide pulvérisé sur ces derniers, une canalisation 33 d'alimentation en liquide à refroidir et à partir de laquelle s'étendent, pour chacun des échangeurs 1 disposés sur chaque côté du réfrigérant, une canalisation 34 d'alimentation de la boîte à eau 3 pourvue d'une vanne 35 et une canalisation 36 d'alimentation du bac ou boîte à eau 5 dans laquelle sont montés successivement une pompe de surpression 37 et une vanne 38. Le réfrigérant comprend également des séparateurs de gouttes 31 surmontant l'échangeur humide 26 et des séparateurs de gouttes 32 placés derrière les échangeurs 1 pour réduire les entraînements vésiculaires des échangeurs 1 lorsque ceux-ci sont arrosés, des persiennes ou des volets orientables 39 dans les entrées d'air pour l'échangeur humide 26, un bassin 40 pour recueillir le liquide s'écoulant de l'échangeur humide 26 et une conduite 41 pour évacuer le liquide refroidi du bassin 40.

Par temps froid, lorsqu'il est impératif de minimiser le panache, le réfrigérant est alimenté en liquide chaud par la canalisation 34 ; ce liquide, généralement de l'eau, circule en une ou plusieurs passes à travers les échangeurs 1 et débouche dans le réseau de distribution 28 de l'échangeur humide 26 à travers lequel il ruisselle pour tomber finalement dans le bassin 40. Les pompes 37 sont alors hors service et les vannes 38 sont fermées de sorte que les tubes échangeurs des échangeurs 1, qui peuvent être de l'un quelconque des types décrits précédemment, ne sont pas arrosés. S'il fait très froid et qu'il y a un risque de geler l'eau dans le corps d'échange humide, on peut, soit étrangler le débit d'air du corps d'échange humide 26 par la fermeture partielle des volets 39, soit utiliser tout autre moyen connu des spécialistes de la technique pour lutter contre le gel dans les réfrigérants humides.

Par temps chaud, lorsque le panache n'est pas à craindre, les vannes 38 sont ouvertes et les pompes 37 sont mises en service de sorte que l'eau à refroidir arrive au réfrigérant également par les canalisations 36, provoquant ainsi un arrosage des tubes échangeurs de l'échangeur 1 et une nette amélioration de l'efficacité thermique de ces derniers.

Pour les grandes unités de réfrigération, soit multicellulaires, soit à grand nombre d'échangeurs 1, il est possible de faire travailler un certain nombre des échangeurs 1 en échangeur sec et les autres en échangeurs hybrides pour adapter au mieux le fonctionnement du réfrigérant aux conditions météorologiques, à sa charge thermique et à la qualité de réfrigération souhaitée. Une telle régulation peut s'effectuer sur un seul échangeur 1 lorsque la distribution d'eau d'arrosage peut être modulée, par exemple, par des batardeaux situés dans le bac 5 séparant ce bac en plusieurs compartiments tels qu'un nombre choisi de compartiments soit seulement alimenté en eau.

Bien entendu, de nombreuses variantes peuvent être envisagées en ce qui concerne l'alimentation en liquide chaud et l'évacuation du liquide refroidi des échangeurs 1 et 26. La Fig. 10 montre l'une de ces variantes suivant laquelle le bac commun 30 est remplacé par une boîte à eau 30a dans laquelle débouchent les tubes échangeurs de l'échangeur 1 associé et qui est surmonté par un bac 30b qui recueille uniquement l'eau d'arrosage des tubes échangeurs. En outre, il est prévu sur la canalisation 34 une canalisation de dérivation 34a pourvue d'une vanne 35a et raccordée directement à la boîte à eau 30a, ainsi qu'une canalisation 42 qui évacue l'eau recueillie dans le bac 30b directement dans le bassin 40.

Ce mode de réalisation a l'avantage, par rapport à celui de la Fig. 9, de permettre, en été, de court-circuiter la partie « sèche » des échangeurs 1 en fermant la vanne 35 et en ouvrant la vanne 35a, le réfrigérant fonctionnant alors uniquement en réfrigérant « humide ». La canalisation 42 est prévue dans le cas où le refroidissement « humide » dans les échangeurs 1 est suffisant pour abaisser la température de l'eau à la valeur voulue mais, bien entendu, on pourrait également prévoir de raccorder la canalisation 42 par exemple à la manchette 29, ou à un réseau inférieur de distribution d'eau (non représentée) tel que décrit dans la demande de brevet français FR-A-1 390 697, pour assurer un refroidissement supplémentaire de l'échangeur 26.

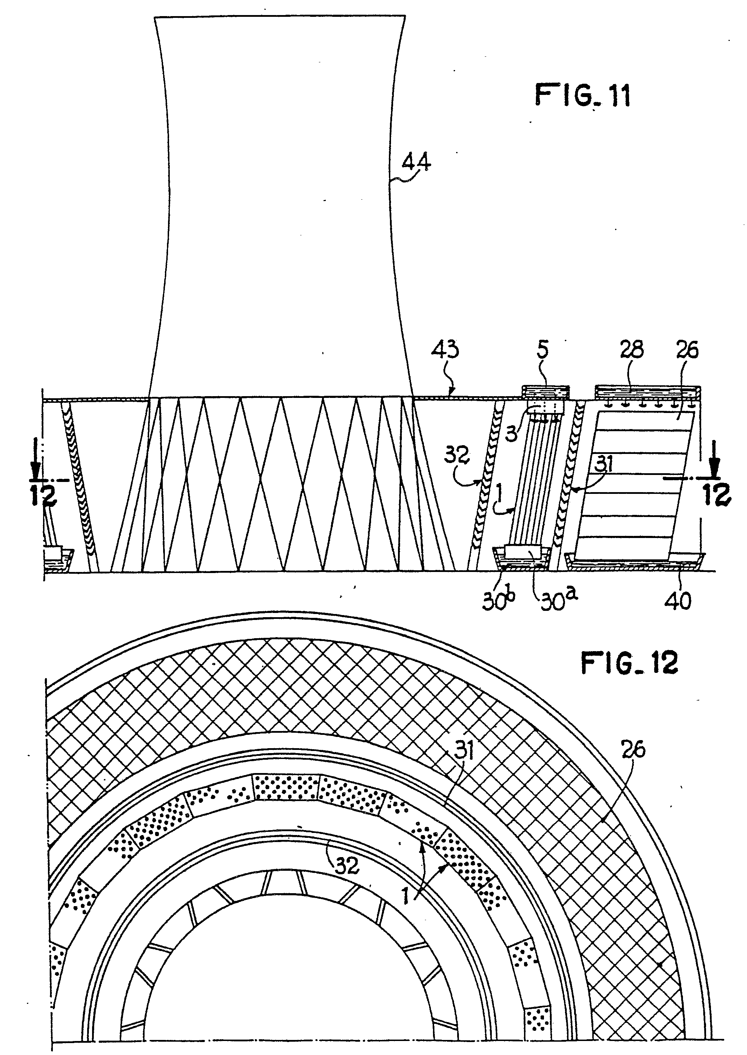

Les Fig. 11 et 12 montrent l'application de l'échangeur 1 suivant l'invention à un réfrigérant à tirage naturel, les mêmes numéros de référence que sur les Fig. 9 et 10 ayant été conservés pour désigner des éléments analogues. Ce réfrigérant comprend de façon classique une galerie périphérique 43 entourant une cheminée 44 de tirage naturel, les échangeurs 26 et 1 étant disposés l'un derrière l'autre dans la galerie de sorte qu'ils sont traversés l'un après l'autre par le flux d'air atmosphérique qui pénètre dans la galerie 43 et sort par la cheminée 44. Le raccordement hydraulique des échangeurs 1 et 26 peut être de type série ou parallèle et de nombreuses variantes peuvent être imaginées à ce sujet, comme cela ressort de la description des Fig. 9 et 10. Bien entendu, l'agencement décrit ci-dessus pourrait tout aussi bien être appliqué à un réfrigérant à tirage mécanique.

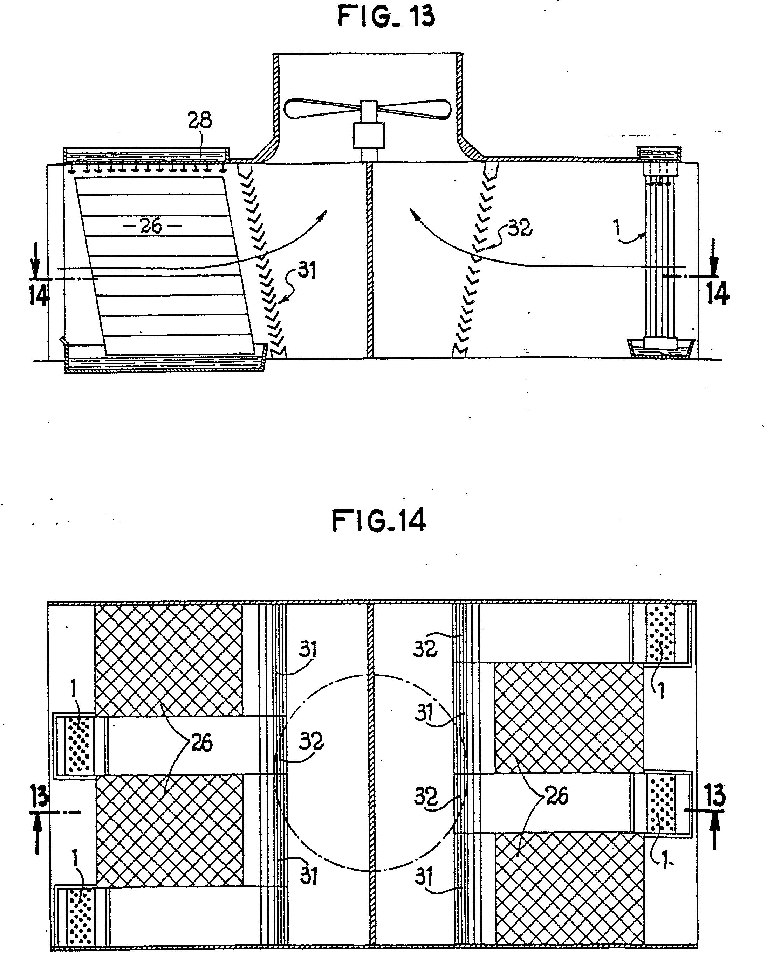

Enfin, les Fig. 13 et 14 illustrent l'application de l'échangeur hybride 1 à un réfrigérant à tirage mécanique de forme rectangulaire dans lequel des échangeurs thermiques sont prévus sur deux côtés opposés du réfrigérant. Dans cet exemple, des échangeurs « humides » 26 alternent avec des échangeurs « hybrides » 1 de sorte qu'ils sont parcourus par des flux d'air atmosphérique parallèles comme dans l'exemple des Fig. 9 et 10.

Bien entendu, de nombreuses modifications peuvent être envisagées, aussi bien au niveau de l'implantation des échangeurs hybrides suivant l'invention dans un réfrigérant atmosphérique ou autre installation, qu'à celui de la conception même de ces échangeurs. A cet égard, on notera en particulier que la position des dispositifs distributeur et d'alimentation 3 et 5 pourrait être inversée, le dispositif 3 se trouvant au-dessus et le dispositif 5 en dessous, et les tubes échangeurs 4 traversant le dispositif d'alimentation.

On notera que, dans l'une ou l'autre des positions relatives des dispositifs distributeur et d'alimentation l'étanchéité de la connexion des tubes dans la plaque de fond du distributeur de liquide d'arrosage peut ne pas être parfaite si le liquide servant à l'arrosage est le même que celui qui circule dans les tubes échangeurs.

Dans le cas de la Fig. 1 où le dispositif d'alimentation en liquide 5 surmonte le dispositif distributeur ou collecteur 3 du fluide d'alimentation interne des tubes échangeurs, soit le dispositif 5 est alimenté et le dispositif 3 ne l'est pas, et le liquide fuyant au niveau des connexions des tubes 6 dans la plaque 3c s'écoule sans inconvénient dans la boîte 3 et les tubes 4, soit le dispositif 3 est alimenté et le liquide sous pression peut fuir de la boîte 3 vers la boîte 5. Si la boîte 5 est alors alimentée, il n'en résulte aucune conséquence. Par contre, si la boîte 5 n'est pas alimentée parce que les tubes 4 ne doivent pas être arrosés, il est nécessaire d'empêcher le liquide parvenant à la boîte 5 de pénétrer à l'intérieur des tubes 6. A cet effet, on peut prévoir de faire dépasser les tubes 6 au-dessus de la plaque 3c et de recueillir le débit de fuite au ras de cette plaque dans le dispositif 5.

Dans le cas de la configuration inverse des dispositifs distributeur et d'alimentation 3 et 5, des fuites ne peuvent se produire que lorsque le dispositif d'alimentation 5 en liquide d'arrosage est alimenté, ce qui n'a alors aucun inconvénient puisque les tubes échangeurs 4 sont par ailleurs arrosés par les tubes 6.

**Revendications**

1. Corps d'échange thermique entre au moins un fluide, par exemple de l'eau, et un gaz, par exemple l'air atmosphérique, comprenant :
   — une batterie de tubes échangeurs (4) verticaux ou fortement inclinés sur l'horizontale, sensiblement parallèles entre eux, à l'intérieur desquels peut circuler ledit fluide,
   — un dispositif horizontal (3) collecteur ou distributeur dudit fluide auquel lesdits tubes échangeurs (4) sont raccordés de façon étanche à leur partie supérieure,
   — un dispositif horizontal (5) d'alimentation en liquide, le dispositif distributeur ou collecteur de fluide et le dispositif d'alimentation en liquide étant placés l'un au-dessus de l'autre,
   — des moyens (6, 7, 8) pour distribuer le liquide dudit dispositif d'alimentation sur la surface extérieure des tubes échangeurs (4),

— et des moyens (27, 44) pour faire circuler le gaz à travers ladite batterie transversalement par rapport aux tubes, dans les intervalles ménagés entre ces derniers, caractérisé en ce que lesdits moyens (6, 7, 8) distributeurs de liquide comprennent une série de tubes pulvérisateurs (6) disposés en alternance avec les tubes échangeurs (4), parallèlement à ces derniers, et raccordés à leur partie supérieure audit dispositif d'alimentation en liquide (5) les tubes (4 ou 6) raccordés à celui des dispositifs qui est placé au-dessus de l'autre traversant ce dernier.

2. Corps d'échange suivant la revendication 1, caractérisé en ce que le dispositif d'alimentation en liquide (5) constitue le dispositif supérieur et en ce que les tubes pulvérisateurs (6) traversent le dispositif distributeur ou collecteur (3) constituant le dispositif inférieur.

3. Corps d'échange suivant la revendication 1, caractérisé en ce que le dispositif distributeur ou collecteur (3) constitue le dispositif supérieur et en ce que les tubes échangeurs (4) traversent d'une façon étanche le dispositif d'alimentation en liquide (5) constituant le dispositif inférieur.

4. Corps d'échange suivant l'une quelconque des revendications 2 ou 3, caractérisé en ce que lesdits tubes (4 ou 6) traversant le dispositif inférieur (5 ou 3) s'étendent à travers des orifices (3a, 3d) ménagés dans une plaque inférieure (3b) formant fond du dispositif inférieur et une plaque supérieure (3c) formant dessus du dispositif inférieur et le fond du dispositif supérieur.

5. Corps d'échange suivant les revendications 2 et 4, caractérisé en ce qu'il comprend des manchons (23) fixés dans les orifices desdites plaques inférieure (3b) et supérieure (3c) et en ce que lesdits tubes pulvérisateurs (6) sont montés de façon amovible dans lesdits manchons.

6. Corps d'échange suivant la revendication 5, caractérisé en ce que lesdits tubes (6) comprennent à leur partie supérieure un épaulement (24) par lequel ils prennent appui contre le fond (3) du dispositif d'alimentation en liquide (5).

7. Corps d'échange suivant l'une quelconque des revendications 2 et 4 ou 5, caractérisé en ce que les tubes (4 ou 6) ou les manchons (23) sont fixés de façon étanche à travers la plaque (3b) constituant le fond dudit dispositif inférieur.

8. Corps d'échange suivant la revendication 6, caractérisé en ce qu'un joint d'étanchéité (25) est interposé entre ledit épaulement (24) et ledit fond (3c).

9. Corps d'échange suivant l'une quelconque des revendications 1 à 8, caractérisé en ce que lesdits tubes pulvérisateurs (6) comportent chacun sous leur extrémité inférieure un dispositif pulvérisateur de liquide (7).

10. Corps d'échange suivant la revendication 9, caractérisé en ce que lesdits tubes pulvérisateurs (6) comportent à leur extrémité inférieure un ajutage (22) de réglage de débit du liquide.

11. Corps d'échange suivant l'une quelconque des revendications 1 à 10, caractérisé en ce que les tubes échangeurs (4) sont disposés en quinconce suivant des rangées parallèles, avec un espacement régulier suivant une direction longitudinale et une direction transversale, et en ce que, à des emplacements régulièrement répartis, au moins un tube échangeur (4) est omis, chaque tube pulvérisateur (6) occupant au moins partiellement ledit emplacement.

12. Corps d'échange suivant l'une quelconque des revendications 2 et 5 ou 6, caractérisé en ce que le dispositif d'alimentation en liquide (5) comprend une plaque supérieure amovible (5a) autorisant le démontage desdits tubes pulvérisateurs (6).

13. Réfrigérant atmosphérique, caractérisé en ce qu'il comprend au moins un corps d'échange suivant l'une quelconque des revendications 1 à 12.

## Claims

1. An exchange unit for exchanging heat between at least one fluid, for example water, and a gas, for example the air of the atmosphere, comprising :
— a battery of exchanger tubes (4) which are vertical or steeply inclined to the horizontal and substantially parallel to each other, within which said fluid may flow,
— a horizontal collector or distributor device (3) for said fluid to which device said exchanger tubes (4) are connected in a sealed manner in their upper part,
— a horizontal liquid supply device (5), the fluid distributor or collector device and the liquid supply device being placed one above the other;
— means (6, 7, 8) for distributing the liquid of said supply device on the outer surface of the exchanger tubes (4),
— and means (27, 44) for passing the gas through said battery transversely of said tubes, in gaps formed between the latter; characterised in that said liquid distributing means (6, 7, 8) comprise a series of spraying tubes (6) disposed in alternating relation to the exchanger tubes (4) and parallel to the latter, and connected in their upper part to said liquid supply device (5), the tubes (4 or 6) connected to that one of the devices which is placed above the other extending through the latter.

2. An exchange unit according to claim 1, characterised in that the liquid supply device (5) constitutes the upper device and the spraying tubes (6) extend through the distributor or collector device (3) constituting the lower device.

3. An exchange unit according to claim 1, characterised in that the distributor or collector device (3) constitutes the upper device and the exchanger tubes (4) extend through in a sealed manner the liquid supply device (5) constituting the lower device.

4. An exchange unit according to either one of the claims 2 and 3, characterised in that said tubes (4 or 6) extending through the lower device (5 or 3) extend through apertures (3a, 3d) formed in a lower plate (3b) constituting the bottom of the lower device and an upper plate (3c) constituting the top of the lower device and the bottom of the upper device.

5. An exchange unit according to claims 2 and 4, characterised in that it comprises sleeves (23) fixed in the apertures of said lower plate (3b) and upper plate (3c) and said spraying tubes (6) are movably mounted in said sleeves.

6. An exchange unit according to claim 5, characterised in that said tubes (6) comprise in their upper part a shoulder (24) by which they bear against the bottom (3c) of the liquid supply device (5).

7. An exchange unit according to claims 2 and 4 or claim 5, characterised in that the tubes (4 or 6) or the sleeves (23) are fixed in a sealed manner in the plate (3b) constituting the bottom of said lower device.

8. An exchange unit according to claim (6), characterised in that a sealing element (25) is interposed between said shoulder (24) and said bottom (3c).

9. An exchange unit according to any one of the claims 1 to 8, characterised in that said spraying tubes (6) each comprise under their lower end a liquid spraying device (7).

10. An exchange unit according to claim 9, characterised in that said spraying tubes (6) comprise at their lower end a nozzle (23) regulating the flow of the liquid.

11. An exchange unit according to any one of the claims 1 to 10, characterised in that the exchanger tubes (4) are disposed in staggered relation in parallel rows, with an even spacing in a longitudinal direction and a transverse direction, and at least one exchanger tube (4) is omitted in evenly spaced apart regions, each spraying tube (6) at least partly occupying said region.

12. An exchange unit according to claims 2 and 5 or claim 6, characterised in that the liquid supply device (5) comprises a detachable upper plate (5a) which allows the dismantling of said sprayer tubes (6).

13. An atmospheric cooler, characterised in that it comprises at least one exchange unit according to any one of the claims 1 to 12.

## Ansprüche

1. Wärmeaustauscher zwischen wenigstens einer Flüssigkeit, beispielsweise Wasser, und einem Gas, beispielsweise atmosphärische Luft, mit :
— einer Batterie von vertikalen oder stark zur Horizontalen geneigten, im wesentlichen zueinander parallelen Wärmeaustauscherrohren (4), durch deren Inneres die Flüssigkeit fließen kann,
— einer horizontalen Sammler- oder Verteilereinrichtung (3) für die Flüssigkeit, an der die Wärmeaustauscherrohre (4) dicht mit ihrem Oberteil angeschlossen sind,
— einer horizontalen Zuführeinrichtung (5) für Flüssigkeit, wobei die Sammler- oder Verteilereinrichtung und die Zuführeinrichtung für Flüssigkeit übereinander angeordnet sind,
— Mitteln (6, 7, 8) zum Verteilen der Flüssigkeit von der Zuführeinrichtung über die Außenfläche der Wärmeaustauscherrohre (4) und
— Mitteln (27, 44) zum Durchströmenlassen des Gases durch die Batterie quer zu den Wärmeaustauscherrohren in die Zwischenräume, die zwischen den letzteren vorgesehen sind, dadurch gekennzeichnet, daß die Mittel (6, 7, 8) zum Verteilen der Flüssigkeit eine Reihe von Zerstäuberrohren (6) aufweisen, die abwechselnd mit den Wärmeaustauscherrohren (4) parallel zu den letzteren angeordnet und mit ihren Oberteilen mit der Zuführeinrichtung (5) für Flüssigkeit verbunden sind, wobei die Rohre (4 oder 6), die an derjenigen der Einrichtungen angeschlossen sind, die sich über der anderen befindet, sich durch die letztere erstrecken.

2. Wärmeaustauscher nach Anspruch 1, dadurch gekennzeichnet, daß die Zuführseinrichtung (5) für Flüssigkeit die obere Einrichtung bildet und die Zerstäuberrohre (6) sich durch die Verteiler- oder Sammlereinrichtung (3), die die untere Einrichtung bildet, erstrecken.

3. Wärmeaustauscher nach Anspruch 1, dadurch gekennzeichnet, daß die Verteiler- oder Sammlereinrichtung (3) die obere Einrichtung bildet und sich die Wärmeaustauscherrohre (4) abgedichtet durch die Zuführeinrichtung (5) für Flüssigkeit, die die untere Einrichtung bildet, erstrecken.

4. Wärmeaustauscher nach einem der Ansprüche 2 oder 3, dadurch gekennzeichnet, daß die Rohre (4 oder 6), die sich durch die untere Einrichtung (5 oder 3) erstrecken, durch Öffnungen (3a, 3d), die in einer unteren Platte (3b), die den Boden der unteren Einrichtung bildet, und einer oberen Platte (3c) angebracht sind, die die Oberseite der unteren Einrichtung und den Boden der oberen Einrichtung bildet.

5. Wärmeaustauscher nach den Ansprüchen 2 und 4, dadurch gekennzeichnet, daß sie Hülsen (23) aufweist, die in den Öffnungen der unteren und oberen Platte (3b, 3c) befestigt sind, und die Zerstäuberrohre (6) auswechselbar in den Hülsen montiert sind.

6. Wärmeaustauscher nach Anspruch 5, dadurch gekennzeichnet, daß die Rohre (6) an ihrem Oberteil eine Schulter (24) aufweisen, mit der sie sich am Boden (3c) der Zuführeinrichtung (5) für Flüssigkeit abstützen.

7. Wärmeaustauscher nach einem der Ansprüche 2 und 4 oder 5, dadurch gekennzeichnet, daß die Rohre (4 oder 6) oder die Hülsen (23) dicht durch die Platte (3b) hindurch befestigt sind, die den Boden der unteren Einrichtung bildet.

8. Wärmeaustauscher nach Anspruch 6, dadurch gekennzeichnet, daß eine Dichtung (25) zwischen der Schulter (24) und dem Boden (3c) angeordnet ist.

9. Wärmeaustauscher nach einem der Ansprüche 1 bis 8, dadurch gekennzeichnet, daß die Zerstäuberrohre (6) jeweils an ihrem unteren Ende eine Flüssigkeitszerstäubungseinrichtung (7) tragen.

10. Wärmeaustauscher nach Anspruch 9, dadurch gekennzeichnet, daß die Zerstäuberrohre (6) an ihrem unteren Ende einen Rohransatz (22) zum Regulieren der Flüssigkeitsaustrittsmenge aufweisen.

11. Wärmeaustauscher nach einem der Ansprüche 1 bis 10, dadurch gekennzeichnet, daß die Wärmeaustauscherrohre (4) in parallen Reihen versetzt mit regelmäßigem Abstand in longitudinaler und transversaler Richtung angeordnet sind und regelmäßig verteilt wenigstens ein Wärmeaustauscherrohr (4) weggelassen ist, wobei jedes Zerstäuberrohr (6) wenigstens teilweise diesen Platz einnimmt.

12. Wärmeaustauscher nach einem der Ansprüche 2 und 5 oder 6, dadurch gekennzeichnet, daß die Zuführeinrichtung (5) für Flüssigkeit eine obere abnehmbare Platte (5a) aufweist, die die Demontage der Zerstäuberrohre (6) ermöglicht.

13. Atmosphärischer Kühler, dadurch gekennzeichnet, daß er wenigstens einen Wärmeaustauscher nach einem der Ansprüche 1 bis 12 aufweist.

FIG. 1

FIG. 2

FIG. 2a

0 010 118

FIG.3

FIG.4

FIG.5

## FIG.6

## FIG.8

## FIG.7

FIG. 9

FIG. 10

FIG. 11

FIG. 12

# FIG. 13

# FIG.14